# EUROPEAN PATENT APPLICATION

(11) **EP 4 417 660 A1**
(43) Date of publication of application: **21.08.2024**
(21) Application number: 21960717.3
(22) Date of filing: 14.10.2021
(51) Int. Cl.: C09D 175/04, C09D 5/00, C09D 7/40, C23C 22/00, C23C 2/26, C23C 2/06, C23C 2/40, B05D 7/14

(54) **COMPOSITION DE TRAITEMENT DE SURFACE POUR TÔLE D'ACIER TERNAIRE GALVANISÉE À CHAUD, TÔLE D'ACIER TERNAIRE GALVANISÉE À CHAUD TRAITÉE EN SURFACE À L'AIDE DE CETTE COMPOSITION ET SON PROCÉDÉ DE PRÉPARATION**

(71) Applicant: POSCO Co., Ltd, Pohang-si, Gyeongsangbuk-do 37859 (KR)
(72) Inventor: CHO, Soo-Hyoun, Gwangyang-si, Jeollanam-do 57807 (KR); SON, Won-Ho, Pohang-si, Gyeongsangbuk-do 37877 (KR)
(74) Representative: Meissner Bolte Partnerschaft mbB
(86) International application number: PCT/KR2021/014278
(87) International publication number: WO 2023/063450

(57) **Abstract**

The objective of the present invention is to provide a surface treatment composition capable of imparting excellent corrosive resistance, blackening resistance, alkali resistance, and an intrinsic surface color property on a ternary hot dip galvanized steel sheet. The present invention provides a surface treatment composition comprising, with respect to 100% by weight of the solid content of the composition: 70-90% by weight of a resin mixture including a high molecular weight polysilicon-modified polyurethane main resin, a low molecular weight polysilicon-modified polyurethane auxiliary resin, and an auxiliary epoxy resin; 0.5-10% by weight of a tarnish inhibitor; 0.5-10% by weight of an adhesion promoter; 0.5-10% by weight of an anticorrosive agent; 0.1-2% by weight of a coloring pigment; and 0.1-1% by weight of a pigment stabilizer.

## Description

### Technical Field

The present disclosure relates to a surface treatment composition for a ternary hot dip galvanized steel sheet, a surface-treated ternary hot dip galvanized steel sheet using same and a preparation method thereof.

### Background Art

In general, compared to a pure galvanized steel sheet, a steel sheet with a hot dip galvanized layer containing magnesium (Mg) and aluminum (Al) as a steel material having excellent corrosion resistance to red rust has an exposed surface, most of which is comprised of zinc (Zn) or a zinc alloy, and accordingly, when exposed to general living conditions, especially wet conditions, a white-rust corrosion phenomenon occurs on a surface. In addition, magnesium and aluminum included in a plating layer are more oxygen-friendly than zinc, and when oxygen to bind to zinc is insufficient, a blackening phenomenon is likely to occur.

Conventionally, as a part of rust prevention treatment, a metal surface was pretreated with chromate of 5 to 100 mg/m², and then an organic coating film was formed. However, due to heavy metals such as chromium (Cr) contained in a pretreatment agent, additional pretreatment facilities and processes were required, and also, due to heavy metal wastewater, the safety of workers has become a problem. In addition, solutions containing hexavalent chromium generated from washing water and wastewater must be treated according to a special treatment process, manufacturing costs may be increased, and the chromate-treated plating steel sheet also had a problem of dissolving chromium ions during use or disposal, which caused environmental pollution problems.

In order to ensure corrosion resistance while solving these problems, conventional technology has developed a surface treatment agent such as a corrosion-resistant metal coating agent that does not contain chromium. In an example, Patent Document 1 and Patent Document 2 disclose a technique for containing aluminum biphosphate, or forming a coating film material through a combination of aromatic carboxylic acids such as sodium acetate, sodium borate, and imidazole in tannic acid, but they may have poor corrosion resistance. Patent Document 3 discloses a surface treatment agent comprising zirconium carbonate, vanadyl ion, and zirconium compound, and while the surface treatment agent has good corrosion resistance, the surface treatment agent is vulnerable to blackening resistance.

On the other hand, Patent Document 4 discloses a surface treatment agent comprising titanium-based, zirconium-based, phosphoric acid-based, and molybdenum-based compounds, but a hot dip galvanized steel sheet using magnesium (Mg), aluminum (Al), and the like, may have a problem in that a blackening phenomenon cannot be suppressed. Patent Document 5 discloses a surface treatment agent comprising ammonium molybdenum, water-dispersible urethane resin, isopropylamine, zirconium carbonate ammonium, an epoxy-based silane coupling agent, and silica sol, which cannot provide sufficient corrosion resistance.

On the other hand, in order to use a steel material for a building material, surface properties must be attractive, and when a customer uses the steel material, it is necessary to provide a unique color so that a material surface thereof may be distinguished from conventional hot dip galvanized steels and hot dip galvanized steels.

### [Prior Art Document]

### [Patent Document]

(Patent Document 1) Japanese Laid-Open Patent Publication No. Sho 53-28857
(Patent Document 2) Japanese Laid-Open Patent Publication No. Sho 51-71233
(Patent Document 3) Japanese Laid-Open Patent Publication No. 2002-332574
(Patent Document 4) Japan Patent No. Hei 7-096699
(Patent Document 5) Japan Japanese Laid-Open Patent Publication No. 2005-146340

### Summary of Invention

### Technical Problem

The present disclosure has been devised in consideration of the circumstances, and is to provide a surface treatment composition capable of imparting excellent corrosion resistance, blackening resistance, alkali resistance, and an intrinsic surface color property on a ternary hot dip galvanized steel sheet, used as a building material.

In addition, the present disclosure is to provide a surface treatment composition that has excellent dispersion stability of a pigment and does not cause precipitation or aggregation even when used after long-term storage, and can impart excellent corrosion resistance and discoloration resistance on a hot dip galvanized steel sheet under a high temperature and high humidity environment.

In addition, since the present disclosure does not contain any heavy metal components such as chromium, an environmental pollutant, the present disclosure is to provide a surface treatment composition that is harmless to the human body and does not cause problems resulting from environmental pollution.

In addition, the present disclosure is to provide a hot dip galvanized steel sheet with excellent corrosion resistance, blackening resistance, alkali resistance, and an intrinsic surface color property, and a preparation method thereof.

### Solution to Problem

According to an aspect of the present disclosure, provided is a surface treatment composition, including: with respect to 100% by weight of a solid content of a composition, 70 to 90% by weight of a resin mixture including a high molecular weight polysilicon-modified polyurethane main resin, a low molecular weight polysilicon-modified polyurethane auxiliary resin, and an auxiliary epoxy resin; 0.5 to 10% by weight of a tarnish inhibitor; 0.5 to 10% by weight of an adhesion promoter; 0.5 to 10% by weight of an anticorrosive agent; 0.1 to 2% by weight of a coloring pigment; and 0.1 to 1% by weight of a pigment stabilizer.

According to an aspect of the present disclosure, provided is a surface-treated ternary hot dip galvanized steel sheet, including: a steel sheet; a ternary hot dip galvanized layer formed on at least one surface of the steel sheet; and a surface treatment coating layer formed on the ternary hot dip galvanized layer, wherein the surface treatment coating layer is formed from the surface treatment composition of one of claims 1 to 10.

According to an aspect of the present disclosure, provided is a preparation method of a surface-treated ternary hot dip galvanized steel sheet, including: coating the surface treatment composition of one of claims 1 to 10 on a ternary hot dip galvanized steel sheet on which a ternary hot dip galvanized layer is formed; and forming a surface treatment coating layer by drying the surface treatment composition.

### Advantageous Effects of Invention

By coating a surface treatment composition according to the present disclosure on a hot dip galvanized steel sheet to form a surface treatment coating layer, it may be possible to provide a hot dip galvanized steel sheet having excellent corrosion resistance, blackening resistance, alkali resistance, and an intrinsic surface color property.

In addition, since a surface treatment composition according to the present disclosure has excellent dispersion stability of a pigment, no precipitation and agglomeration may occur even when used after long storage, thereby imparting excellent surface gloss to a hot dip galvanized steel sheet.

In addition, since a surface treatment composition according to the present disclosure does not include any heavy metal components such as chromium, an environmental pollutant, the surface treatment composition is harmless to the human body and does not cause problems due to environmental pollution.

### Best Mode for Invention

Hereinafter, preferred embodiments of the present disclosure will be described. However, embodiments of the present disclosure may be modified into various different forms, and the scope of the present disclosure is not limited to embodiments described below.

The present disclosure relates to a surface treatment composition for a ternary hot dip galvanized steel sheet with excellent solution stability, excellent flat sheet corrosion resistance, processed portion corrosion resistance, blackening resistance, and alkali resistance when applied to the ternary hot dip galvanized steel sheet, and an excellent surface property. In addition, the present disclosure relates to a surface-treated ternary hot dip galvanized steel sheet using the surface treatment composition and a preparation method thereof.

A surface treatment composition according to an embodiment of the present disclosure may include, with respect to 100% by weight of a solid content of a composition, 70 to 90% by weight of a resin mixture including a high molecular weight polysilicon-modified polyurethane main resin, a low molecular weight polysilicon-modified polyurethane auxiliary resin, and an auxiliary epoxy resin; 0.5 to 10% by weight of a tarnish inhibitor; 0.5 to 10% by weight of an adhesion promoter; 0.5 to 10% by weight of an anticorrosive agent; 0.1 to 2% by weight of a coloring pigment; and 0.1 to 1% by weight of a pigment stabilizer.

In an embodiment, a high molecular weight polysilicon-modified polyurethane main resin is a component capable of imparting excellent corrosion resistance, water resistance, and solvent resistance on a ternary hot dip galvanized steel sheet. The high molecular weight polysilicon-modified polyurethane main resin is not limited thereto, and may be synthesized from a silicon polymer and a polycarbonate polyol, and has a self-crosslinking property due to the use of a trimer isocyanate polymer in synthesis.

The high molecular weight polysilicon-modified polyurethane main resin may have a weight average molecular weight (Mw) of 100,000 to 200,000. When the weight average molecular weight is less than 100,000, it may be difficult to ensure sufficient corrosion resistance, whereas when the weight average molecular weight is greater than 200,000, solution stability may be lowered and hardness of a coating film may be increased, which may result in a decrease in formability.

A glass transition temperature (Tg) of the high molecular weight polysilicon-modified polyurethane main resin may range from -20°C to -10°C. When the glass transition temperature is less than -20°C, it may be difficult to secure sufficient corrosion resistance, whereas when the glass transition temperature is greater than -10°C, the solution stability may be lowered and the hardness of the coating film may be increased, which may result in a decrease in formability.

In an embodiment, the low molecular weight polysilicon-modified polyurethane auxiliary resin is a component capable of increasing formability and adhesion by imparting soft properties to the ternary hot dip galvanized steel sheet. The low molecular weight polysilicon-modified polyurethane auxiliary resin is not limited thereto, but may be synthesized from silicone polymer and polycarbonate polyol. Unlike the high molecular weight polysilicon-modified polyurethane main resin, the low molecular weight polysilicon-modified polyurethane auxiliary resin does not have a self-crosslinking property.

The low molecular weight polysilicon-modified polyurethane auxiliary resin may have a weight average molecular weight of 30,000 to 70,000. When the weight average molecular weight is less than 30,000, it may be difficult to secure sufficient corrosion resistance due to a decrease in density of the coating film, whereas when the weight average molecular weight is greater than 70,000, the effect of imparting soft properties on the coating film may be insufficient, which may reduce formability and adhesion.

A glass transition temperature (Tg) of the low molecular weight polysilicon-modified polyurethane auxiliary resin may be -30°C to -20°C. When the glass transition temperature is less than -30°C, it may be difficult to secure sufficient corrosion resistance due to the decrease in density of the film, whereas when the glass transition temperature is greater than -20°C, the effect of imparting soft properties on the coating film may be insufficient, which may reduce the formability and adhesion.

In an embodiment, the epoxy auxiliary resin is a component for forming a dense coating film on the ternary hot dip galvanized steel sheet and improving flat sheet corrosion resistance.

An epoxide equivalent ratio of the epoxy auxiliary resin may be 450 to 550 g/eq. When the epoxide equivalent ratio is less than 450 g/eq, crude density and flat sheet corrosion resistance of the coating film are insufficient, whereas when the epoxide equivalent ratio is greater than 550 g/eq, the hardness of the coating film may be excessive, which may reduce the formability.

A weight average molecular weight (Mw) of the epoxy auxiliary resin may be 450 to 4,000. When the weight average molecular weight (Mw) is less than 450, the effect of improving the crude density and flat sheet corrosion resistance of the coating film is insufficient, whereas when the weight average molecular weight (Mw) is greater than 4,000, the hardness of the coating film may be excessive, which may reduce the formability.

In the resin mixture, high molecular weight polysilicon-modified polyurethane main resin: low molecular weight polysilicon-modified polyurethane auxiliary resin: epoxy auxiliary resin may be mixed at a weight ratio of 1:4.5:4.5 to 9:0.5:0.5, preferably, 1:0.5 to 9:0.5:0.5, and more preferably, 2:0.5:0.5 to 9:0.5:0.5. For example, high molecular weight polysilicon-modified polyurethane main resin: low molecular weight polysilicon-modified polyurethane auxiliary resin: epoxy auxiliary resin may be mixed and used at a weight ratio of 2:0.5:0.5, and more preferably at a weight ratio of 1:0.5:0.5.

When a resin content of the high molecular weight polysilicon-modified polyurethane is significantly small in the resin mixture, the flat sheet corrosion resistance, the processed portion corrosion resistance, and alkali resistance of the steel sheet may be reduced. On the other hand, when the content of the high molecular weight polysilicon-modified polyurethane main resin in the resin mixture is significantly high, the corrosion resistance and blackening resistance of the processed portion of the steel sheet may be reduced.

In an embodiment, the content of the resin mixture may be 70 to 90% by weight based on 100% by weight of the solid content of the surface treatment composition. When the content of the resin mixture is less than 70% by weight, it may be difficult to secure sufficient corrosion resistance and alkali resistance, and when the content of the resin mixture is greater than 90% by weight, the content of additives for improving physical properties in the surface treatment composition is relatively small, which may rather reduce the corrosion resistance and reduce the solution stability.

In an embodiment, the tarnish inhibitor is a component included to prevent the ternary hot dip galvanized steel sheet from being tarnished in a high temperature and humidity environment. The tarnish inhibitor may be at least one compound selected from the group consisting of ammonium molybdate and sodium molybdate.

A content of the tarnish inhibitor may be 0.5 to 10% by weight based on 100% by weight of the solid content of the surface treatment composition. When the content of the tarnish inhibitor is less than 0.5% by weight, sufficient tarnish resistance cannot be expected, and when the content of the tarnish inhibitor is greater than 10% by weight, the effect of improving the tarnish resistance is insignificant, while the corrosion resistance may be reduced.

In an embodiment, the adhesion promoter is a component for improving the adhesion between the steel sheet and the resin to prevent the peeling of the coating film and to prevent moisture from penetrating into a plating layer under a high humidity environment. At least one selected from the group consisting of ester phosphate, ammonium phosphate, and ammonium zirconium carbonate (AZC) may be used as the adhesion promoter.

A content of the adhesion promoter may be 0.5 to 10% by weight based on 100% by weight of the solid content of the surface treatment composition. When the content of the adhesion promoter is less than 0.5% by weight, the effect of improving adhesion and preventing moisture permeation is insufficient, and when the content of the adhesion promoter is greater than 10% by weight, which may reduce the solution stability of the surface treatment composition.

In an embodiment, the anticorrosive agent is a component included to improve the corrosion resistance of the ternary hot dip galvanized steel sheet, and may be at least one selected from the group consisting of a phosphoric acid-based rust inhibitor, a fluorine-based rust inhibitor, a vanadium-based rust inhibitor, a cerium salt-based rust inhibitor and a selenium salt-based rust inhibitor.

A content of the anticorrosive agent may be 0.5 to 10% by weight based on 100% by weight of the solid content of the surface treatment composition. When the content of the anticorrosive agent is less than 0.5% by weight, it may be difficult to ensure blackening resistance and alkali resistance, and when the content of the anticorrosive agent is greater than 10% by weight, it may be difficult to secure corrosion resistance.

In an embodiment, the coloring pigment is a component for imparting an attractive surface property by providing color to the ternary hot dip galvanized steel sheet. As the coloring pigment, at least one selected from the group consisting of: one or more inorganic pigments selected from the group consisting of titanium, lead, iron, copper and chromium; and an azo organic pigment may be used.

A content of the coloring pigment may be 0.1 to 2% by weight based on 100% by weight of the solid content of the surface treatment composition. When the content of the coloring pigment is less than 0.1% by weight, sufficient color may be difficult to express, and when the content of the coloring pigment is greater than 2% by weight, the solution stability and corrosion resistance may be reduced.

In an embodiment, the pigment stabilizer is a component for uniformly dispersing the coloring pigment within the coating film by capping the coloring pigment, thereby improving the gloss of the coating film. The pigment stabilizer may be a carboxyl polymer, but the present disclosure is not limited thereto.

The content of the pigment stabilizer may be 0.1 to 1% by weight based on 100% by weight of the solid content of the surface treatment composition. When the content of the pigment stabilizer is less than 0.1% by weight, it may be difficult to ensure sufficient solution stability, and when the content of the pigment stabilizer is greater than 1% by weight, the gloss of the coating film may be rather reduced due to excessive residual components in the coating film.

In an embodiment, the surface treatment composition includes water as a solvent to dilute each component, and the water may be deionized water or distilled water. The solvent may be included as a remainder in addition to each component of the present disclosure, and the content thereof may be 60 to 80% by weight. Furthermore, the surface treatment composition according to an embodiment may further include N-ethyl-2-pyrrolidone (NEP) as an auxiliary solvent to ensure the solution stability, and the N-ethyl-2-pyrrolidone may be included in an amount of 20 to 40% by weight of the total solvent.

The ternary hot dip galvanized steel sheet surface-treated with a surface treatment composition including a water-soluble organic resin and an inorganic compound according to an embodiment of the present disclosure has excellent corrosion resistance and blackening resistance, as well as excellent surface color and gloss. In addition, the surface treatment composition according to an embodiment of the present invention does not include hexavalent chromium, which is a harmful environmental substance, and includes a water-soluble organic resin and an inorganic compound that are harmless to the human body as main components, thereby preventing damage to the human body and environmental pollution problems.

According to an embodiment of the present disclosure, a ternary hot dip galvanized steel sheet surface-treated with the surface treatment composition is provided.

Specifically, the surface-treated ternary hot dip galvanized steel sheet may include a steel sheet, a ternary hot dip galvanized layer formed on at least one surface of the steel sheet, and a surface treatment coating layer formed on the ternary hot dip galvanized layer and including an organic resin and an inorganic compound.

The base steel sheet and the ternary hot dip galvanized layer include an Al enrichment layer formed at an interface, and an area occupation ratio of the Al concentrated layer may is 70% to 100%. In addition, the ternary hot dip galvanized layer may include Al: 0.2 to 15% by weight, Mg: 0.5 to 3.5% by weight, Zn as a remainder and inevitable impurities.

In an embodiment, the ternary hot dip galvanized steel sheet includes base steel and an Al enrichment layer formed on an interface of a Zn-Al-Mg-based alloy plating layer, and an area occupation ratio of the Al enrichment layer may be 70% to 100%, more preferably 73% to 100%. Here, the area occupation ratio refers to a ratio of the area of the Al enrichment layer to the area of the base steel in a case of assuming a flat surface without considering three-dimensional curves when viewed from a surface of a plated steel sheet in a direction of the thickness of the base steel. When the area occupation ratio of the Al enrichment layer is secured to 70% or more, the Al enrichment layer may have a shape in which fine particles are continuously formed, thereby remarkably improving plating properties and plating adhesion.

In the ternary hot dip galvanized steel sheet according to an embodiment of the present disclosure, Mg plays a very important role in improving corrosion resistance of the ternary hot dip galvanized steel sheet, which effectively prevents corrosion of the ternary hot dip galvanized steel sheet by forming a dense zinc hydroxide-based corrosion product on a surface of a plating layer under a corrosion environment. In order to secure a desired corrosion resistance effect of the present disclosure, Mg need to be included in an amount of 0.5% by weight or more in the plating layer, more preferably 0.9% by weight or more. However, if the content thereof is excessive, Mg oxidizing dross increases rapidly on a surface of a plating bath, thus offsetting an antioxidant effect caused by an addition of trace elements. In order to prevent this, Mg must be included in 3.5% by weight or less in a plating layer, and more preferably 3.2% by weight or less.

In the ternary hot dip galvanized steel sheet according to an embodiment of the present disclosure, Al inhibits the formation of Mg oxide dross in the plating bath, which improves corrosion resistance of a plated steel sheet by reacting with Zn and Mg in the plating bath to form a Zn-Al-Mg-based intermetallic compound. In order to obtain the effect, Al must be included in an amount of 0.2% by weight or more in the plating layer, more preferably 0.9% by weight or more. However, when the content is excessive, weldability and phosphate treatment properties of a plated steel material may be deteriorated. In order to prevent this, Al must be included in an amount of 15% by weight or less in the plating layer, more preferably 12% by weight or less.

A surface treatment coating layer including the organic resin and the inorganic compound may be formed from a surface treatment composition including: with respect to 100% by weight of a solid content of a composition, 70 to 90% by weight of a resin mixture including a high molecular weight polysilicon-modified polyurethane main resin, a low molecular weight polysilicon-modified polyurethane auxiliary resin, and an auxiliary epoxy resin; 0.5 to 10% by weight of a tarnish inhibitor; 0.5 to 10% by weight of an adhesion promoter; 0.5 to 10% by weight of an anticorrosive agent; 0.1 to 2% by weight of a coloring pigment; and 0.1 to 1% by weight of a pigment stabilizer. Since the surface treatment composition has the same technical characteristics as described above, it is not repeatedly described.

In an embodiment, a surface treatment coating layer is a coating layer formed by drying the surface treatment composition, which corresponds to the remaining components after all volatile substances contained in a surface treatment coating layer including an organic resin and an inorganic compound are volatilized. Accordingly, the surface treatment coating layer including the organic resin and the inorganic compound does not include water or N-ethyl-2-pyrrolidone, which is a solvent, and also does not include solvents included in a surface treatment component including the organic resin and the inorganic compound. Accordingly, the component included in the surface treatment coating layer including the organic resin and the inorganic compound correspond to a content based on 100% by weight of the total solid content.

According to an embodiment of the present disclosure, provided is a preparation method of a surface-treated ternary hot dip galvanized steel sheet, including: coating the above-described surface treatment composition on a ternary hot dip galvanized steel sheet on which a ternary hot dip galvanized layer is formed; and forming a surface treatment coating layer by drying the surface treatment composition.

In an example embodiment, the surface treatment composition may be coated to a thickness of 2.5 to 50 um. In addition, the coated surface treatment composition forms a dry coating layer through a drying process, and a thickness of the dry coating layer may be 1 to 10 um. When a coating thickness of the surface treatment composition is less than 2.5 um, the surface treatment composition may be applied too thinly to bulging area of a steel sheet roughness, resulting in a problem of reducing corrosion resistance, and when the thickness is greater than 50 um, the coating layer may be formed to be significantly thick to deteriorate formability, and economic problems may occur due to an increase in solution treatment costs.

A method of coating the surface treatment composition is not particularly limited as long as it is a generally performed coating method, but any one coating method selected from, for example, roll coating, spraying, deposition, spray squeezing, and deposition squeezing, may be performed.

A process of drying the surface treatment composition coated on the ternary hot dip galvanized steel sheet may be performed at a temperature of 70 to 250°C based on a final delivery temperature of a material steel sheet (PMT). When a drying temperature is less than 70°C based on the final delivery temperature of the material steel sheet (PMT), since a curing reaction of an organic resin is not completely performed, a coating structure is not formed, and corrosion resistance and alkali resistance may be degraded. On the other hand, when the drying temperature is greater than 250°C based on the final delivery temperature of the material steel sheet (PMT), work productivity may be reduced due to an occurrence of water vapor and fumes during a water cooling process, and the surface quality of the product may be reduced due to a condensation phenomenon in which evaporated water vapor is condensed on an upper portion of a drying facility.

On the other hand, the drying process may be performed in a hot air drying furnace or an induction heating furnace. In the case of drying a surface treatment composition using the hot air drying furnace, an internal temperature of the hot air drying furnace is, preferably 100 to 300°C. In the case of drying the surface treatment composition using the induction heating furnace, a current applied to the induction heating furnace is, preferably 1000 to 5000A, more preferably 1500 to 3500A. When the internal temperature of the hot air drying furnace is less than 100°C or a current applied to the induction heating furnace is less than 1000A, a curing reaction of the surface treatment composition may not be completely performed, thereby deteriorating corrosion resistance and alkali resistance. In addition, when the internal temperature of the hot air drying furnace is greater than 300°C or the current applied to the induction heating furnace is greater than 5000A, during a water cooling process, work productivity may be reduced due to the occurrence of water vapor and fumes, and the surface quality of the product may be reduced due to the condensation phenomenon in which evaporated water vapor is condensed on the upper portion of the drying facility.

In addition, after drying the surface treatment composition to form a surface treatment coating layer, the surface treatment coating layer may be cooled with water, thus providing a finally surface-treated ternary hot dip galvanized steel sheet.

The preparation method of a ternary hot-dip galvanized steel sheet according to an embodiment of the present disclosure may be performed in a continuous process, and the velocity of the continuous process may be 80 to 120 mpm. When the velocity of the continuous process is less than 80 mpm, there may be a problem of lowering productivity, and when the velocity of the continuous process is greater than 120 mpm, the solution may be scattered in the process of drying the surface treatment composition, thereby causing surface defects.

### Mode for Invention

### Embodiment

Hereinafter, embodiments of the present disclosure will be described in detail. The following examples are only for understanding the present disclosure and do not limit the present disclosure.

### Preparation of Test Specimen

A ternary hot dip galvanized steel sheet (coating weight on one side 0.5 to 2.0g/m2) consisting of a ternary hot dip galvanized layer including, by wt%, Mg: 1.5%, Al: 1.5%, and Zn as a remainder was cut into a size of 7cm x 15cm (width x length) to remove oil, and each of the prepared compositions was applied to a hot dip galvanized steel sheet using a bar coater. Then, a test specimen was prepared by performing curing under the condition of Peak Metal Temperature (PMT) of 180±20°C.

### Testing and Evaluation methods

In an example embodiment of the present disclosure, a method and evaluation criteria for evaluating physical properties of a surface-treated steel sheet are as follows.

### <Flat Sheet Corrosion Resistance>

According to a method specified in ASTM B117, a white-rust occurrence rate of the steel sheet over time was measured after treating the specimen. In this case, evaluation criteria thereof are as follows.
⊚: It took 144 hours or more for white rust to occur
○: It took 96 hours or more and less than 144 hours for white rust to occur
△: It took 55 hours or more and less than 96 hours for white rust to occur
X: It took less than 55 hours for white rust to occur

### <Processed Portion Corrosion Resistance>

After pushing the specimen up to a height of 6 mm using an Erichsen tester, a degree of white-rust generation was measured after 24 hours. In this case, evaluation criteria thereof are as follows.
⊚: A white rust occurrence area being less than 5% after 48 hours
○: A white rust occurrence area being 5% or more and less than 7% after 48 hours
X: A white rust occurrence area being 7% or more after 48 hours

### <Blackening Resistance>

By leaving the specimen in a thermo-hygrostat maintained at a temperature of 50°C and relative humidity of 95% for 120 hours, changes in the color of the specimen before and after the test (color difference: ΔE) were observed. In this case, evaluation criteria thereof are as follows.
⊚: ΔE ≤ 2
○: 2 < ΔE ≤ 3
△: 3 < ΔE ≤ 4
X: ΔE > 4

### <Alkali resistance>

The specimen was immersed in an alkali degreasing solution at 60°C for 2 minutes and then washed with water and was subject to air blowing, and then color differences (ΔE) before and after the test were measured. The alkali degreasing solution used Finecleaner L 4460 A: 20g/2.4L + L 4460 B 12g/2.4L (pH=12) from Parkerizing Co Ltd. In this case, evaluation criteria thereof are as follows.
⊚: ΔE ≤ 2
○: 2 < ΔE ≤ 3
△: 3 < ΔE ≤ 4
X: ΔE > 4

### <Solution stability>

The surface treatment composition was placed in a container and placed in a constant temperature oven at 50°C, stored for 7 days, and then visually observed for precipitate generation, and viscosity changes were measured. In this case, evaluation criteria thereof are as follows.
○: No precipitation, viscosity change less than 1 cP
**△**: No precipitation, viscosity change greater than or equal to 1 cP and less than 5 cP
X: Precipitation occurrence or viscosity change greater than or equal to 5 cP

### <Glossiness>

The gloss of the specimen was measured at an incident angle of 60° using a gloss meter. In this case, evaluation criteria thereof are as follows.
○: Good, gloss value greater than or equal to 80
X: Bad, gloss value less than 80

### Components of surface treatment composition

The components of the surface treatment composition used in the examples are as follows.
- High molecular weight polysilicon-modified polyurethane main resin: Polyurethane resin with a weight average molecular weight of 150,000
- Low molecular weight polysilicon modified polyurethane auxiliary resin (auxiliary resin 1) : Polyurethane resin with a weight average molecular weight of 50,000
- Epoxy auxiliary resin (auxiliary resin 2) : epoxy resin with an equivalent ratio of 500 g/eq and a weight average molecular weight of 2,000
- Tarnish inhibitor: ammonium molybdenum
- Adhesion Promoter: ammonium zirconium carbonate
- Anticorrosive agent: fluoride rust inhibiting agent
- Coloring pigment: azo organic pigment
- Pigment stabilizer: carboxyl-based polymer
- solvent: A mixed solvent of water and N-ethyl-2-pyrrolidone (NEP, N-ethyl-2-pyrrolidone)

### Example 1: Changes in physical properties according to a content of a resin mixture

A surface treatment composition was prepared by mixing a resin mixture mixed with the aforementioned main resin, auxiliary resin 1 and auxiliary resin 2 at a weight ratio of 1:0.5:0.5, a tarnish inhibitor, an adhesion promoter, an anticorrosive agent, a coloring pigment, and a pigment stabilizer in the content illustrated in Table 1. The surface treatment composition includes 49% by weight of water and 21% by weight of N-ethyl-2-pyrrolidone (70% by weight based on a total weight of the composition).

The solution stability of the prepared surface treatment composition was evaluated. In addition, after applying the surface treatment composition to the above-described test specimen, flat sheet corrosion resistance, processed portion corrosion resistance, blackening resistance and the alkali resistance of the specimen were evaluated. The evaluation results thereof are shown in Table 1 below.

**Table 1:**

| DIVISION | COMPOSITION OF COMPOSITION (WT%) | | | | | | FLAT SHEET CORROSION RESISTANCE | PROCESSED PORTION CORROSION RESISTANCE | BLACKENING RESISTANCE | ALKALI RESISTANCE | SOLUTION STABILITY |
|---|---|---|---|---|---|---|---|---|---|---|---|
| | RESIN MIXTURE | TARNISH INHIBITOR | ADHESION PROMOTER | ANTI CORROSIVE AGENT | COLORING PIGMENT | PIGMENT STABILIZER | | | | | |
| COMPARATIVE EXAMPLE 1 | 67 | 10 | 10 | 10 | 2 | 1 | X | X | ○ | X | ○ |
| INVENTIVE EXAMPLE 1 | 70 | 9 | 9.5 | 10 | 1 | 0.5 | ○ | ⊚ | ○ | ○ | ○ |
| INVENTIVE EXAMPLE 2 | 80 | 5 | 5.5 | 8 | 1 | 0.5 | ⊚ | ⊚ | ⊚ | ⊚ | ○ |
| INVENTIVE EXAMPLE 3 | 90 | 2 | 2 | 4.5 | 1 | 0.5 | ⊚ | ⊚ | ⊚ | ⊚ | ○ |
| COMPARATIVE EXAMPLE 2 | 92 | 2 | 1.5 | 3 | 1 | 0.5 | X | X | X | ○ | X |

| | | | | | | | | | | | |
|---|---|---|---|---|---|---|---|---|---|---|---|
| * A CONTENT OF THE COMPOSITION IS BASED ON 30% BY WEIGHT OF SOLIDS | | | | | | | | | | | |

Referring to Table 1, Inventive Examples 1 to 3 in which a content of a resin mixture satisfies a content proposed by the present disclosure showed results of good (o) or more in all physical properties. However, Comparative Example 1 including an excessively small amount of resin mixture showed poor flat sheet corrosion resistance, processed portion corrosion resistance, and alkali resistance, and Comparative Example 2 containing an excessively large amount of resin mixture showed poor results of the flat sheet corrosion resistance, the processed portion corrosion resistance, the blackening resistance, and the solution stability.

### Example 2: Changes in physical properties according to a content ratio of the main resin and the auxiliary resin

A surface treatment composition including 80% by weight of a resin mixture including the above-described main resin, auxiliary resin 1 and auxiliary resin 2, 5% by weight of a tarnish inhibitor, 5.5% by weight of an adhesion promoter, 8% by weight of an anticorrosive agent, 1% by weight of a coloring pigment, and 0.5% by weight of a pigment stabilizer was prepared. The surface treatment composition includes a mixed solvent of 49% by weight of water and 21% by weight of N-ethyl-2-pyrrolidone (70% by weight based on the total weight of the composition).

In the resin mixture, the main resin, the auxiliary resin 1, and the auxiliary resin 2 were mixed at a weight ratio shown in Table 2 below.

After applying the surface treatment composition to the above-described test specimen, flat sheet corrosion resistance, processed portion corrosion resistance, blackening resistance, and alkali resistance of the specimen were evaluated, and evaluation results thereof are shown in Table 2 below.

**Table 2:**

| DIVISION | WEIGHT RATIO(A:B:C) | | | FLAT SHEET CORROSION RESISTANCE | PROCESSED PORTION CORROSION RESISTANCE | BLACKENING RESISTANCE | ALKALI RESISTANCE |
|---|---|---|---|---|---|---|---|
| | MAIN RESIN (A) | AUXILIARY RESIN 1(B) | AUXILIARY RESIN 2(C) | | | | |
| COMPARATIVE EXAMPLE 3 | 5 | 47.5 | 47.5 | X | X | ○ | X |
| INVENTIVE EXAMPLE 4 | 10 | 45 | 45 | ○ | ⊚ | ○ | ○ |
| INVENTIVE EXAMPLE 5 | 50 | 25 | 25 | ⊚ | ⊚ | ⊚ | ⊚ |
| INVENTIVE EXAMPLE 6 | 67 | 16.5 | 16.5 | ⊚ | ⊚ | ⊚ | ⊚ |
| INVENTIVE EXAMPLE 7 | 90 | 5 | 5 | ⊚ | ⊚ | ⊚ | ⊚ |
| INVENTIVE EXAMPLE 4 | 95 | 2.5 | 2.5 | ○ | X | X | ○ |

| | | | | | | | |
|---|---|---|---|---|---|---|---|
| * A CONTENT OF THE COMPOSITOR IS BASED ON 30% BY WEIGHT OF SOLIDS | | | | | | | |

Referring to Table 2, Inventive Examples 4 to 7 in which a weight ratio of the main resin and the auxiliary resin satisfies a content ratio proposed by the present disclosure, showed results of good (o) or more in all including properties. On the other hand, Comparative Example 3 containing an excessively small amount of water-soluble main resin showed poor flat sheet corrosion resistance, processed portion corrosion resistance and alkali resistance, and Comparative Example 4 including an excessively small amount of the auxiliary resin 1 and the auxiliary resin 2 showed poor results of the corrosion resistance and the blackening resistance in the processed portion.

### Example 3: Changes in physical properties according to a content of the tarnish inhibitor

A surface treatment composition was prepared by mixing a resin mixture mixed with the above-described main resin, auxiliary resin 1 and auxiliary resin 2 at a weight ratio of 1:0.5:0.5, a tarnish inhibitor, an adhesion promoter, an anticorrosive agent, a coloring pigment, and a pigment stabilizer in the content shown in Table 3. The surface treatment composition includes a mixed solvent of 49% by weight of water and 21% by weight of N-ethyl-2-pyrrolidone (70% by weight based on the total weight of the composition) .

The solution stability of the prepared surface treatment composition was evaluated. In addition, after applying the surface treatment composition to the above-described test specimen, flat sheet corrosion resistance, processed portion corrosion resistance, blackening resistance, and alkali resistance of the specimen were evaluated. The evaluation results thereof are shown in Table 3 below.

**Table 3:**

| DIVISION | COMPOSITION OF COMPOSITION (WT%) | | | | | | FLAT SHEET CORROSION RESISTANCE | PROCESSED PORTION CORROSION RESISTANCE | BLACKENING RESISTANCE | ALKALI RESISTANCE | SOLUTION STABILITY |
|---|---|---|---|---|---|---|---|---|---|---|---|
| | TARNISH INHIBITOR | RESIN MIXTURE | ADHESION PROMOTER | ANTI CORROSIVE AGENT | COLORING PIGMENT | PIGMENT STABILIZER | | | | | |
| COMPARATIVE EXAMPLE 5 | 0.3 | 82.2 | 8 | 8 | 1 | 0.5 | ○ | ○ | X | X | ○ |
| INVENTIVE EXAMPLE 8 | 0.5 | 82 | 8 | 8 | 1 | 0.5 | ○ | ○ | ○ | ○ | ○ |
| INVENTIVE EXAMPLE 9 | 5 | 77.5 | 8 | 8 | 1 | 0.5 | ⊚ | ⊚ | ⊚ | ⊚ | ○ |
| INVENTIVE EXAMPLE 10 | 10 | 72.5 | 8 | 8 | 1 | 0.5 | ⊚ | ⊚ | ⊚ | ○ | ○ |
| COMPARATIVE EXAMPLE 6 | 12 | 72.5 | 7 | 7 | 1 | 0.5 | X | X | ⊚ | ⊚ | X |

| | | | | | | | | | | | |
|---|---|---|---|---|---|---|---|---|---|---|---|
| * A CONTENT OF THE COMPOSITION S BASED ON 30% BY WEIGHT OF SOLIDS | | | | | | | | | | | |

Referring to Table 3, Inventive Examples 8 to 10 of the present disclosure in which a content of the tarnish inhibitor satisfies a content proposed by the present disclosure showed results of good (o) or more in all physical properties. On the other hand, Comparative Example 5 including an excessively small amount of tarnish inhibitor showed poor blackening resistance and alkali resistance, and Comparative Example 6 including an excessively large amount of tarnish inhibitor showed poor results of the flat sheet corrosion resistance, the processed portion corrosion resistance, and the solution stability.

### Example 4: Changes in physical properties according to a content of the adhesion promoter

A surface treatment composition was prepared by mixing a resin mixture mixed with the above-described main resin, auxiliary resin 1 and auxiliary resin 2 at a weight ratio of 1:0.5:0.5, a tarnish inhibitor, an adhesion promoter, an anticorrosive agent, a coloring pigment, and a pigment stabilizer in the content shown in Table 4. The surface treatment composition includes 49% by weight of water and 21% by weight of N-ethyl-2-pyrrolidone (70% by weight based on the total weight of the composition).

The solution stability of the prepared surface treatment composition was evaluated. In addition, after applying the surface treatment composition to the above-described test specimen, the flat sheet corrosion resistance, the processed part corrosion resistance, the blackening resistance and the alkali resistance of the specimen were evaluated. The evaluation results thereof are shown in Table 4 below.

**Table 4:**

| DIVISION | COMPOSITION OF COMPOSITION (WT%) | | | | | | FLAT SHEET CORROSION RESISTANCE | PROCESSED PORTION CORROSIObT RESISTANCE | BLACKENING RESISTANCE | ALKALI RESISTANCE | SOLUTION STABILITY |
|---|---|---|---|---|---|---|---|---|---|---|---|
| | ADHESION PROMOTER | RESIN MIXTURE | TARNISH INHIBITOR | ANTI CORROSIVE AGENT | COLORING PIGMENT | PIGMENT STABILIZER | | | | | |
| COMPARATIVE EXAMPLE 7 | 0.3 | 82.2 | 8 | 8 | 1 | 0.5 | X | X | X | ○ | ○ |
| INVENTIVE EXAMPLE 11 | 0.5 | 82 | 8 | 8 | 1 | 0.5 | ○ | ○ | ○ | ○ | ○ |
| INVENTIVE EXAMPLE 12 | 5 | 77.5 | 8 | 8 | 1 | 0.5 | ⊚ | ⊚ | ⊚ | ⊚ | ○ |
| INVENTIVE EXAMPLE 13 | 10 | 72.5 | 8 | 8 | 1 | 0.5 | ⊚ | ⊚ | ○ | ⊚ | ○ |
| COMPARATIVE EXAMPLE 8 | 12 | 72.5 | 7 | 7 | 1 | 0.5 | ○ | ○ | ○ | ○ | X |

| | | | | | | | | | | | |
|---|---|---|---|---|---|---|---|---|---|---|---|
| * A CONTENT OF THE COMPOSITION IS BASED ON 3C% BY WEIGHT CF SOLIDS | | | | | | | | | | | |

Referring to Table 4, Inventive Examples 11 to 13 in which a content of the adhesion promoter satisfies a content proposed by the present disclosure showed results of good (o) or more in all physical properties. However, Comparative Example 7 including an excessively small amount of adhesion promoter showed poor results of the flat sheet corrosion resistance, the processed portion corrosion resistance, and the alkali resistance, and Comparative Example 8 including an excessively large amount of adhesion promoter showed poor solution stability.

### Example 5: Changes in physical properties according to the content of rust preventive agents

A surface treatment composition was prepared by mixing a resin mixture in which the above-described main resin, auxiliary resin 1 and auxiliary resin 2 were mixed at a weight ratio of 1:0.5:0.5, a tarnish inhibitor, an adhesion promoter, an anticorrosive agent, a coloring pigment, and a pigment stabilizer in the content shown in Table 5. The surface treatment composition includes 49% by weight of water and 21% by weight of N-ethyl-2-pyrrolidone (70% by weight based on the total weight of the composition).

The solution stability of the prepared surface treatment composition was evaluated. In addition, after applying the surface treatment composition to the above-described test specimen, the flat sheet corrosion resistance, the processed portion corrosion resistance, the blackening resistance, and the alkali resistance of the specimen were evaluated. The evaluation results thereof are shown in Table 5 below.

**Table 5:**

| DIVISION | COMPOSITION OF COMPOSITION (WT%) | | | | | | FLAT SHEET CORROSION RESISTANCE | PROCESSED PORTION CORROSION RESISTANCE | BLACKENING RESISTANCE | ALKALI RESISTANCE | SOLUTION STABILITY |
|---|---|---|---|---|---|---|---|---|---|---|---|
| | ANTI CORROSIVE AGENT | RESIN MIXTURE | TARNISH INHIBITOR | ADHESION PROMOTER | COLORING PIGMENT | PIGMENT STABILIZER | | | | | |
| COMPARATIVE EXAMPLE 9 | 0.3 | 82.2 | 8 | 8 | 1 | 0.5 | X | X | ○ | ○ | ○ |
| INVENTIVE EXAMPLE 14 | 0.5 | 82 | 8 | 8 | 1 | 0.5 | ○ | ⊚ | ○ | ○ | ○ |
| INVENTIVE EXAMPLE 15 | 5 | 77.5 | 8 | 8 | 1 | 0.5 | ⊚ | ⊚ | ⊚ | ⊚ | ○ |
| INVENTIVE EXAMPLE 16 | 10 | 72.5 | 8 | 8 | 1 | 0.5 | ⊚ | ⊚ | ⊚ | ⊚ | ○ |
| COMPARATIVE EXAMPLE 10 | 12 | 72.5 | 7 | 7 | 1 | 0.5 | ○ | ○ | X | X | ○ |

| | | | | | | | | | | | |
|---|---|---|---|---|---|---|---|---|---|---|---|
| * A CONTENT OF THE COMPOSITION IS BASED ON 30% BY WEIGHT OF SOLIDS | | | | | | | | | | | |

Referring to Table 5, Invention Examples 14 to 16 in which a content of the anticorrosive agent satisfies a content proposed by the present disclosure showed results of good (o) or more in all physical properties. However, Comparative Example 9 including an excessively small amount of anticorrosive agent showed poor results of the flat sheet corrosion resistance and the processed portion corrosion resistance, and Comparative Example 10 including an excessively large amount of anticorrosive agent showed poor black degeneration and alkali resistance.

### Example 6: Changes in physical properties according to a content of a coloring pigment

A surface treatment composition was prepared by mixing a resin mixture in which the above-described main resin, auxiliary resin 1 and auxiliary resin 2 were mixed at a weight ratio of 1:0.5:0.5, a tarnish inhibitor, an adhesion promoter, an anticorrosive agent, a coloring pigment, and a pigment stabilizer in the content shown in Table 6. The surface treatment composition includes 49% by weight of water and 21% by weight of N-ethyl-2-pyrrolidone (70% by weight based on the total weight of the composition).

The solution stability of the prepared surface treatment composition was evaluated. In addition, after applying the surface treatment composition to the above-described test specimen, the flat sheet corrosion resistance, the processed portion corrosion resistance, the blackening resistance, the alkali resistance and a surface color expression level of the specimen were evaluated. The surface color expression level was classified into good (o) and bad (X) by visually observing the test specimen with the surface treatment composition treated. The evaluation results thereof are shown in Table 6 below.

**Table 6:**

| DIVISION | COMPOSITION OF COMPOSITION (WT%) | | | | | | FLAT SHEET CORROSION RESISTANCE | PROCESSED PORTION CORROSION RESISTANCE | BLACKENING RESISTANCE | ALKALI RESISTANCE | SURFACE COLOR EXPRESSION | SOLUTION STABILITY |
|---|---|---|---|---|---|---|---|---|---|---|---|---|
| | COLORING PIGMENT | RESIN MIXTURE | TARNISH INHIBITOR | ADHESION PROMOTER | ANTI CORROSIVE AGENT | PIGMENT STABILIZER STABILIZER | | | | | | |
| COMPARATIVE EXAMPLE 11 | 0.05 | 82.45 | 6 | 6 | 5 | 0.5 | ○ | ⊚ | ○ | ○ | X | ○ |
| INVENTIVE EXAMPLE 17 | 0.1 | 82.4 | 6 | 6 | 5 | 0.5 | ○ | ⊚ | ○ | ○ | ○ | ○ |
| INVENTIVE EXAMPLE 18 | 1 | 81.5 | 6 | 6 | 5 | 0.5 | ⊚ | ⊚ | ⊚ | ⊚ | ○ | ○ |
| INVENTIVE EXAMPLE 19 | 2 | 80.5 | 6 | 6 | 5 | 0.5 | ⊚ | ⊚ | ⊚ | ⊚ | ○ | ○ |
| COMPARATIVE EXAMPLE 12 | 2.5 | 80 | 6 | 6 | 5 | 0.5 | X | X | ⊚ | ○ | ○ | X |

| | | | | | | | | | | | | |
|---|---|---|---|---|---|---|---|---|---|---|---|---|
| * A COTENT OF THE COMPOSITION IS BASED ON 38% EY WEIGHT OF SOLIDS | | | | | | | | | | | | |

Referring to Table 6, Inventive Examples 17 to 19 in which a content of the coloring pigment satisfies a content proposed by the present disclosure showed results of good (o) or more in all physical properties. However, Comparative Example 11 including an excessively small of coloring pigment showed poor surface color expression, and Comparative Example 12 including an excessively large amount of coloring pigment showed poor results of the flat sheet corrosion resistance, the processed portion corrosion resistance, and the solution stability.

### Example 7: Changes in physical properties according to a content of the pigment stabilizer

A surface treatment composition was prepared by mixing the resin mixture mixed with the above-described main resin, auxiliary resin 1 and auxiliary resin 2 at a weight ratio of 1:0.5:0.5, a tarnish inhibitor, an adhesion promoter, an anticorrosive agent, a coloring pigment, and a pigment stabilizer in the content shown in Table 7. The surface treatment composition includes 49% by weight of water and 21% by weight of N-ethyl-2-pyrrolidone (70% by weight based on the total weight of the composition).

The solution stability of the prepared surface treatment composition was evaluated. In addition, after applying the surface treatment composition to the above-described test specimen, the flat sheet corrosion resistance, the processed portion corrosion resistance, the blackening resistance, the alkali resistance and glossiness of the specimen were evaluated. The evaluation results are shown in Table 7 below.

**Table 7:**

| DIVISION | COMPOSITION OF COMPOSITION (WT%) | | | | | | FLAT SHEET CORROSION RESISTANCE | PROCESSED PORTION CORROSION RESISTANCE | BLACKENING RESISTANCE | GLOSSINESS | ALKALI RESISTANCE | SOLUTION STABILITY |
|---|---|---|---|---|---|---|---|---|---|---|---|---|
| | PIGMENT STABILIZER | RESIN MIXTURE | TARNISH INHIBITOR | ADHESION PROMOTER | ANTI CORROSIVE AGENT | COLORING PIGMENT | | | | | | |
| COMPARATIVE EXAMPLE 13 | 0.05 | 81.95 | 6 | 6 | 5 | 1 | ○ | ○ | ○ | ○ | ○ | X |
| INVENTIVE EXAMPLE 20 | 0.1 | 81.9 | 6 | 6 | 5 | 1 | ○ | ○ | ○ | ○ | ○ | ○ |
| INVENTIVE EXAMPLE 21 | 0.5 | 81.5 | 6 | 6 | 5 | 1 | ⊚ | ⊚ | ⊚ | ○ | ⊚ | ○ |
| INVENTIVE EXAMPLE 22 | 1 | 81 | 6 | 6 | 5 | 1 | ⊚ | ⊚ | ○ | ○ | ⊚ | ○ |
| COMPARATIVE EXAMPLE 14 | 1.5 | 80.5 | 6 | 6 | 5 | 1 | ○ | ○ | ○ | X | ○ | ○ |

| | | | | | | | | | | | | |
|---|---|---|---|---|---|---|---|---|---|---|---|---|
| * A CONTENT OF THE COMPOSITION IS BASED ON 30% BY WEIGHT OF SOLIDS | | | | | | | | | | | | |

Referring to Table 7, Inventive Examples 20 to 22 in which a content of the pigment stabilizer satisfies a content proposed by this invention showed results of good (o) or more in all physical properties. However, Comparative Example 13 including an excessively amount of pigment stabilizer showed poor solution stability, and Comparative Example 14 including an excessively large amount of pigment stabilizer showed poor glossiness.

### Example 8: Changes in physical properties according to a thickness of a coating layer and a drying temperature

The surface-treated composition according to Invention Example 2 was coated with BAR on the test specimen and dried in a hot air drying furnace. The flat sheet corrosion resistance, the processed portion corrosion resistance, the blackening resistance, and the alkali resistance of the specimen were evaluated while controlling a thickness and a PMT temperature of the coating layer as shown in Table 8 below.

**Table 8:**

| DIVISION | THICKNESS OF COATING LAYER (*µ*m) | DRYING TEMPERATURE (°C) | FLAT SHEET CORROSION RESISTANCE | PROCESSED PORTION CORROSION RESISTANCE | BLACKENING RESISTANCE | ALKALI RESISTANCE |
|---|---|---|---|---|---|---|
| COMPARATIVE EXAMPLE 15 | 0.5 | 180 | Δ | X | Δ | Δ |
| INVENTIVE EXAMPLE 23 | 1 | 180 | ⊚ | ⊚ | ⊚ | ⊚ |
| INVENTIVE EXAMPLE 24 | 4 | 180 | ⊚ | ⊚ | ⊚ | ⊚ |
| INVENTIVE EXAMPLE 25 | 7 | 180 | ⊚ | ⊚ | ○ | ⊚ |
| INVENTIVE EXAMPLE 26 | 10 | 180 | ⊚ | ⊚ | ○ | ⊚ |
| COMPARATIVE EXAMPLE 16 | 11 | 180 | ⊚ | X | ○ | ⊚ |
| COMPARATIVE EXAMPLE 17 | 5 | 50 | X | X | X | X |
| INVENTIVE EXAMPLE 27 | 5 | 70 | ○ | ○ | ○ | Δ |
| INVENTIVE EXAMPLE 28 | 5 | 100 | ⊚ | ⊚ | ⊚ | ⊚ |
| INVENTIVE EXAMPLE 29 | 5 | 250 | ⊚ | ⊚ | ○ | ⊚ |
| COMPARATIVE EXAMPLE 18 | 5 | 270 | ⊚ | ⊚ | X | ⊚ |

As shown in Table 8 above, Inventive Examples 23 to 26 in which the coating layer having a thickness of 1 to 10 um was formed showed results of good (o) or more in all physical properties. On the other hand, Comparative Example 15 in which the formed coating was excessively thin showed moderate (△) results in the flat sheet corrosion resistance, the blackening resistance, and the alkali resistance, and showed poor results of the processed portion corrosion resistance. On the other hand, Comparative Example 16 in which an excessively thick coating film was formed showed poor results of the processed portion corrosion resistance, and since there is no improved physical property compared to Inventive Example 26, a thickness of the coating film exceeding 10 um in economic terms is not required. Meanwhile, as shown in Table 8 above, Inventive Examples 27 to 29 in which a coating layer was formed by drying a coating film at 70 to 250°C showed results of good (o) or more in all physical properties. On the other hand, Comparative Example 17 which had an excessively low drying temperature showed poor results in all physical properties because the coating film was not sufficiently dried. On the other hand, Comparative Example 18 in which the drying temperature is excessively high showed poor results of the blackening resistance due to fume drops on the steel sheet caused by condensation of water vapor generated in the steel sheet during an air cooling process (water cooling). While example embodiments have been shown and described above, it will be apparent to those skilled in the art that modifications and variations could be made without departing from the scope of the present disclosure as defined by the appended claims.

## Claims

1. A surface treatment composition, comprising:
with respect to 100% by weight of a solid content of a composition,
70 to 90% by weight of a resin mixture including a high molecular weight polysilicon-modified polyurethane main resin, a low molecular weight polysilicon-modified polyurethane auxiliary resin, and an auxiliary epoxy resin;
0.5 to 10% by weight of a tarnish inhibitor;
0.5 to 10% by weight of an adhesion promoter;
0.5 to 10% by weight of an anticorrosive agent;
0.1 to 2% by weight of a coloring pigment; and
0.1 to 1% by weight of a pigment stabilizer.

2. The surface treatment composition of claim 1, wherein the high molecular weight polysilicon-modified polyurethane main resin, the low molecular weight polysilicon-modified polyurethane auxiliary resin, and the auxiliary epoxy resin are mixed in a weight ratio of 1:4.5:4.5 to 9:0.5:0.5.

3. The surface treatment composition of claim 1, wherein the high molecular weight polysilicon-modified polyurethane main resin has a glass transition temperature (Tg) of -20°C to -10°C and a weight average molecular weight (Mw) of 100,000 to 200,000.

4. The surface treatment composition of claim 1, wherein the low molecular weight polysilicon-modified polyurethane auxiliary resin has a glass transition temperature (Tg) of -30°C to -20°C and a weight average molecular weight (Mw) of 30,000 to 70,000.

5. The surface treatment composition of claim 1, wherein the auxiliary epoxy resin has an epoxide equivalent ratio of about 450 to about 550 g/eq and a weight average molecular weight (Mw) of about 450 to about 4,000.

6. The surface treatment composition of claim 1, wherein the tarnish inhibitor is at least one selected from the group consisting of ammonium molybdate and sodium molybdate.

7. The surface treatment composition of claim 1, wherein the adhesion promoter is at least one selected from the group consisting of phosphoric acid ester, ammonium phosphate, and ammonium zirconium carbonate.

8. The surface treatment composition of claim 1, wherein the anticorrosive agent is at least one selected from the group consisting of a phosphoric acid rust inhibitor, a fluorine rust inhibitor, a vanadium rust inhibitor, a cerium salt rust inhibitor and a selenium salt rust inhibitor.

9. The surface treatment composition of claim 1, wherein the coloring pigment includes at least one selected from the group consisting of an inorganic pigment selected from the group consisting of titanium, lead, iron, copper and chromium; and an azo organic pigment.

10. The surface treatment composition of claim 1, wherein the pigment stabilizer is a carboxyl polymer.

11. The surface treatment composition of one of claims 1 to 10, wherein the surface treatment composition further comprises a solvent, and
based on the total weight of the surface treatment composition, the content of the solid is 20 to 40% by weight and the remainder is a solvent.

12. The surface treatment composition of claim 11, wherein the solvent includes 20 to 40% by weight of N-ethyl-2-pyrrolidone (NEP) and water as a remainder based on the total weight of the solvent.

13. A surface-treated ternary hot dip galvanized steel sheet, comprising:
a steel sheet;
a ternary hot dip galvanized layer formed on at least one surface of the steel sheet; and
a surface treatment coating layer formed on the ternary hot dip galvanized layer,
wherein the surface treatment coating layer is formed from the surface treatment composition of one of claims 1 to 10.

14. The surface-treated ternary hot dip galvanized steel sheet of claim 13, wherein the ternary hot dip galvanized layer includes an Al enrichment layer formed at an interface, and
an area occupation ratio of the Al enrichment layer is 70% to 100%.

15. The surface-treated ternary hot dip galvanized steel sheet of claim 13, wherein the ternary hot dip galvanized layer includes Al: 0.2 to 15% by weight, Mg: 0.5 to 3.5% by weight, Zn as a remainder and inevitable impurities.

16. The surface-treated ternary hot dip galvanized steel sheet of claim 13, wherein the surface treatment coating layer has a thickness of 1 µm to 10 µm.

17. A preparation method of a surface-treated ternary hot dip galvanized steel sheet, comprising:
coating the surface treatment composition of one of claims 1 to 10 on a ternary hot dip galvanized steel sheet on which a ternary hot dip galvanized layer is formed; and
forming a surface treatment coating layer by drying the surface treatment composition.

18. The preparation method of a surface-treated ternary hot dip galvanized steel sheet of claim 17, wherein the surface treatment composition is coated to a thickness of 2.5 um to 50 µm.

19. The preparation method of a surface-treated ternary hot dip galvanized steel sheet of claim 17, wherein in the forming a surface treatment coating layer, the surface treatment composition is dried by increasing a temperature by 70 to 250°C.
